# EUROPÄISCHE PATENTSCHRIFT

(11) **EP 2 921 743 B1**
(45) Veröffentlichungstag und Bekanntmachung des Hinweises auf die Patenterteilung: **11.10.2017**
(21) Anmeldenummer: 15153237.1
(22) Anmeldetag: 30.01.2015
(51) Int. Cl.: F16H 3/00, F16H 3/093, F16H 3/10

(54) **Doppelkupplungsgetriebe und Verfahren zum Anfahren mittels eines Doppelkupplungsgetriebes**
Twin-clutch transmission and method for starting by means of a twin-clutch transmission
Boîte de vitesses à double embrayage et procédé de démarrage au moyen d'une boîte de vitesses à double embrayage

(30) Priorität: 19.03.2014 DE 102014103759
(43) Veröffentlichungstag der Anmeldung: 23.09.2015
(73) Patentinhaber: GETRAG B.V. & Co. KG, 74199 Untergruppenbach (DE)
(72) Erfinder: Bernhardt, Udo, 50259 Pulheim (DE)
(74) Vertreter: Witte, Weller & Partner Patentanwälte mbB

(56) Entgegenhaltungen:
- DE-A1-102007 049 267
- FR-A1- 2 919 701
- JP-A- 2013 019 424

## Beschreibung

Die vorliegende Erfindung betrifft ein Doppelkupplungsgetriebe mit einer ersten Reibkupplung, einer zweiten Reibkupplung, einem ersten Teilgetriebe und einem zweiten Teilgetriebe, wobei die erste Reibkupplung und das erste Teilgetriebe einen ersten Leistungsübertragungszweig bilden und wobei die zweite Reibkupplung und das zweite Teilgetriebe einen zweiten Leistungsübertragungszweig bilden, ferner mit einer Eingangswellenanordnung und zwei hierzu parallelen Ausgangswellen, wobei die Eingangswellenanordnung eine erste, dem ersten Leistungsübertragungszweig zugeordnete Eingangswelle und eine zweite, dem zweiten Leistungsübertragungszweig zugeordnete Eingangswelle aufweist.

Ferner betrifft die vorliegende Erfindung ein Verfahren zum Anfahren mittels einer Anfahr-Gangstufe in einem Doppelkupplungsgetriebe, wobei von einem Zustand ausgegangen wird, bei dem die erste und die zweite Reibkupplung geöffnet sind.

Doppelkupplungsgetriebe der oben beschriebenen Art sind generell bekannt. In solchen Doppelkupplungsgetrieben können zugkraftunterbrechungsfreie Gangwechsel durchgeführt werden, indem ausgehend von einem Fahrbetrieb über einen der Leistungsübertragungszweige in dem Teilgetriebe des anderen Leistungsübertragungszweiges eine Gangstufe vorgewählt wird und die zwei Reibkupplungen anschließend überschneidend betätigt werden, so dass der Leistungsfluss anschließend über den anderen Leistungsübertragungszweig erfolgt.

Das generelle Layout solcher Doppelkupplungsgetriebe ist eine Vorgelegebauweise, bei der Wellen über Radsätze miteinander gekoppelt sind, wobei die Radsätze jeweils ein Losrad aufweisen, das über eine Schaltkupplungsanordnung mit einer zugeordneten Welle verbindbar ist oder davon lösbar ist, um auf diese Weise eine Gangstufe ein- oder auszulegen.

In einer Bauweise für den Längseinbau in Kraftfahrzeugen ist hierbei parallel zu einer Eingangswellenanordnung, die in der Regel eine Innenwelle und eine Hohlwelle beinhaltet, eine Vorgelegewelle vorgesehen, die mit einer Ausgangswelle gekoppelt ist. Für den Front-Quer-Einbau in Kraftfahrzeugen ist eine axial kurze Bauweise gefordert. Hierbei ist es bekannt, zu der Eingangswellenanordnung zwei parallele Ausgangswellen vorzusehen, wobei jede Ausgangswelle über ein Abtriebsrad mit einem Eingangsglied eines Differentials verbunden ist.

Um die Spreizung solcher Getriebe zu erhöhen, ist es bei Doppelkupplungsgetrieben mit einer solchen Drei-Wellenanordnung bekannt, wenigstens eine Windungsgangstufe einzurichten.

Dokument JP 2013 019424 A offenbart ein Doppelkupplungsgetriebe nach den Oberbegriffen der unabhängigen Ansprüche 1 und 2 und wird auch als nächstliegender Stand der Technik gegenüber dem Gegenstand des unabhängigen Anspruchs 8 angesehen.

Es ist vor diesem Hintergrund eine Aufgabe der Erfindung, ein verbessertes Doppelkupplungsgetriebe und ein verbessertes Verfahren zum Anfahren mittels eines Doppelkupplungsgetriebes anzugeben, insbesondere für den Front-Quer-Einbau. Dabei soll vorzugsweise eine axial und radial kompakte Bauweise erzielt werden.

Diese Aufgabe wird bei dem eingangs genannten Doppelkupplungsgetriebe dadurch gelöst, dass wenigstens eine Gangstufe als Windungsgangstufe ausgebildet ist, bei der ein Leistungsfluss von einer der Eingangswellen zu einer der Ausgangswellen eingerichtet ist, indem Leistung von der einen Eingangswelle zunächst über die andere Ausgangswelle und weiter über die andere Eingangswelle auf die eine Ausgangswelle geleitet wird, wobei an der anderen Ausgangswelle zwei Koppel-Losräder gelagert sind, die unterschiedlichen Teilgetrieben zugeordnet sind und die über eine Koppeleinrichtung miteinander koppelbar sind, wobei die Koppeleinrichtung als Freilauf-Koppeleinrichtung ausgebildet ist.

Die Freilauf-Koppeleinrichtung ist vorzugsweise ein Bauelement, das nicht aktiv durch eine Schaltaktuatorik oder dergleichen angesteuert werden muss. Vielmehr arbeitet die Freilauf-Koppeleinrichtung vorzugsweise passiv. Die Freilauf-Koppeleinrichtung ist nach der Art einer Überholkupplung ausgebildet, so dass bei Einrichten der Windungsgangstufe das eine Koppel-Losrad das andere mitnimmt. Das andere Koppel-Losrad kann jedoch, ohne das eine Koppel-Losrad mitzunehmen, schneller drehen.

Da die zwei Koppel-Losräder unterschiedlichen Teilgetrieben zugeordnet sind, kann ein Verfahren zum Anfahren mittels einer Anfahr-Gangstufe in einem solchen Doppelkupplungsgetriebe, mit den von einem Zustand ausgehenden Schritten, bei dem die erste und die zweite Reibkupplung geöffnet sind, wie folgt durchgeführt werden:
- Schließen einer Reibkupplung einer Gangstufen in jenem Teilgetriebe, das den geraden Gangstufen zugeordnet ist, wobei die Schaltkupplung an der einen Ausgangswelle angeordnet ist, und
- Schließen der Reibkupplung, die den ungeraden Gangstufen zugeordnet ist, so dass Leistung zum Anfahren von der den ungeraden Gangstufen zugeordneten Eingangswelle auf eines der Koppel-Losräder übertragen wird, wobei die Leistung dann über die Freilauf-Koppeleinrichtung auf das andere Koppel-Losrad übertragen wird, von wo aus die Leistung über die andere Eingangswelle und die geschlossene Schaltkupplung auf die eine Ausgangswelle übertragen wird.

Die Windungsgangstufe ist bei diesem Verfahren folglich als Anfahr-Gangstufe ausgebildet.

Hierdurch wird ermöglicht, die Anfahr-Gangstufe (bei klassischen Doppelkupplungsgetrieben die Gangstufe 1) durch eine Windungsgangstufe zu ersetzen. Demzufolge ist für die Gangstufe 1 kein eigener Radsatz in dem Doppelkupplungsgetriebe vorzusehen. Daher kann das Doppelkupplungsgetriebe axial kompakt bauen.

Da zudem der Radsatz mit der niedrigsten Übersetzung eingespart werden kann, bei dem der Radsatz ein Rad mit dem größten Durchmesser hätte, kann das Doppelkupplungsgetriebe auch in radialer Richtung kompakt realisiert werden.

Zudem ergibt sich eine Einsparung von radialem Bauraum, da es nicht notwendig ist, die Koppeleinrichtung zu schalten. Demzufolge entfallen vorzugsweise eine Schaltgabel und eine Schaltstange für eine Schaltkupplung zum Koppeln der Koppel-Losräder.

Zudem ist keine zusätzliche Schaltaktuatorik und -steuerung für den ersten Gang nötig.

Insgesamt ergeben sich auch verringerte Gesamtherstellkosten.

Auf dem Gebiet der Antriebsstränge für Kraftfahrzeuge ist es zwar generell bekannt, Freilauf-Koppeleinrichtungen zu verwenden. Beispielsweise ist es aus den Dokumenten DE 3721 214 A1 und DE 103 47 273 A1 jeweils bekannt, jeder Schaltkupplung zum Ein- und Auslegen von Gangstufen eines Doppelkupplungsgetriebes einen eigenen umschaltbaren Freilauf zuzuordnen, um auf diese Weise den Schaltkomfort zu erhöhen. Diese Maßnahme war zum Anmeldezeitpunkt dieser Dokumente vermutlich deswegen bevorzugt, weil die überschneidende Steuerung von zwei Reibkupplungen eines Doppelkupplungsgetriebes noch nicht so komfortabel durchgeführt werden konnte, wie es das grundlegende Konzept von Doppelkupplungsgetrieben generell vorgesehen hat. Durch das Bereitstellen von Freiläufen für jede der Schaltkupplungen der einzelnen Gangstufen war es möglich, den Vorgang der überschneidenden Betätigung der Reibkupplungen zu vereinfachen.

Das erfindungsgemäße Doppelkupplungsgetriebe weist jedoch vorzugsweise lediglich eine einzige Freilauf-Koppeleinrichtung auf, die zudem nicht dazu ausgebildet ist, ein Losrad mit einer zugeordneten Welle zu koppeln, wie es aus dem genannten Stand der Technik bekannt ist. Vielmehr werden durch die Freilauf-Koppeleinrichtung zwei Koppel-Losräder miteinander gekoppelt.

Vorzugsweise weist das Doppelkupplungsgetriebe eine Reihe von weiteren Gangstufen auf, die jeweils in klassischer Weise als Radsatz-Gangstufen ausgebildet sind, denen also jeweils ein Radsatz und eine Schaltkupplung zugeordnet ist. Das Ein- und Auslegen von diesen anderen Gangstufen erfolgt folglich in klassischer Weise durch Betätigen von jeweiligen Schaltkupplungen, von denen jeweils zwei zu einer Schaltkupplungsanordnung in Form eines Schaltkupplungspaketes zusammengefasst sein können.

Die Windungsgangstufe ist vorzugsweise eine Anfahr-Gangstufe des Doppelkupplungsgetriebes. Die Anfahr-Gangstufe kann eine Vorwärts-Gangstufe sein, wobei die Windungsgangstufe die in klassischen Getrieben vorhandene Gangstufe 1 nachbildet. Die Anfahr-Gangstufe kann jedoch auch eine Rückwärts-Gangstufe sein, und zwar ggf. eine zusätzliche Rückwärts-Gangstufe, die beispielsweise eine kürzere oder längere Übersetzung haben kann als eine Rückwärts-Gangstufe, die als normale Gangstufe ohne Windungs-Leistungsfluss eingerichtet ist.

Das erfindungsgemäße Doppelkupplungsgetriebe weist vorzugsweise 5, 6, 7 oder mehr Vorwärts-Gangstufen auf, insbesondere genau sechs Vorwärts-Gangstufen.

Das den ungeraden Gangstufen zugeordnete Teilgetriebe weist vorzugsweise Radsätze für die Gangstufen 3, 5 (und ggf. 7) auf. Das den geraden Gangstufen zugeordnete Teilgetriebe weist Radsätze für die Gangstufen 2, 4, 6 auf. Ferner ist ein Radsatz für die Rückwärts-Gangstufe vorzugsweise dem Teilgetriebe mit den geraden Gangstufen zugeordnet.

Die Aufgabe wird somit vollkommen gelöst.

Es ist bei dem erfindungsgemäßen Doppelkupplungsgetriebe von besonderem Vorzug, wenn eine Anfahr-Gangstufe als Windungsgangstufe ausgebildet ist, wobei die zwei Koppel-Losräder so ausgewählt sind, dass die Drehzahl an der einen Eingangswelle größer ist als die Drehzahl an der anderen Eingangswelle, wenn die Koppel-Losräder gekoppelt sind.

Durch diese Maßnahme kann die Drehzahl an der anderen Eingangswelle gegenüber einer Antriebsdrehzahl eines Antriebsmotors verringert werden, so dass mit dieser verringerten Drehzahl dann eine höhere Gangstufe (bspw. Gangstufe 2) zum Anfahren verwendet werden kann.

Daher ist es insbesondere vorteilhaft, wenn zur Einrichtung der Anfahr-Gangstufe an der einen Ausgangswelle ein Losrad in den Leistungsfluss geschaltet ist, das einer zweiten Gangstufe zugeordnet ist.

Ferner ist es insgesamt vorteilhaft, wenn ein erstes Koppel-Losrad der Koppel-Losräder einer Gangstufe des ersten Teilgetriebes zugeordnet ist, wobei ein zweites Koppel-Losrad der Koppel-Losräder einer Gangstufe des zweiten Teilgetriebes zugeordnet ist.

Bei dieser Ausführungsform werden als Koppel-Losräder nicht ausschließlich für den Zweck der Einrichtung einer Windungsgangstufe zugeordnete Koppel-Losräder verwendet. Vielmehr werden als Koppel-Losräder solche Losräder verwendet, die in dem Doppelkupplungsgetriebe ansonsten zur Einrichtung von normalen Gangstufen (nicht Windungsgangstufen) verwendet werden.

Dies trägt zu einer kompakten und effizienten Bauweise bei.

Die Gangstufe des zweiten Teilgetriebes ist dabei vorzugsweise höher als die Gangstufe des ersten Teilgetriebes. Die Gangstufe des zweiten Teilgetriebes ist vorzugsweise die höchste Gangstufe des Doppelkupplungsgetriebes.

Von besonderem Vorzug ist es, wenn das erste Koppel-Losrad der Gangstufe 5 des ersten Teilgetriebes zugeordnet ist, und wenn das zweite Koppel-Losrad der Gangstufe 6 des zweiten Teilgetriebes zugeordnet ist.

Gemäß der Erfindung zur Anbindung der Freilauf-Koppeleinrichtung an die Koppel-Losräder ist vorgesehen, dass eines der Koppel-Losräder einen sich in axialer Richtung erstreckenden Schulterabschnitt aufweist, an dessen Außenumfang ein Innenglied der Freilauf-Koppeleinrichtung festgelegt ist.

Hierdurch kann die Freilauf-Koppeleinrichtung kompakt in das Getriebe integriert werden.

Erfindungsgemäß ist ein Außenglied der Freilauf-Koppeleinrichtung in Bezug auf das andere der Koppel-Losräder festgelegt.

Gemäß der Erfindung nach dem unabhängigen Anspruch 1 ist das andere der Koppel-Lösrader mit einem Überbrückungsglied drehfest verbunden, das die Freilauf-Koppeleinrichtung übergreift, wobei das Außenglied der Freilauf-Koppeleinrichtung an einem Innenumfangsabschnitt des Überbrückungsgliedes festgelegt ist.

Das Überbrückungsglied kann ein von dem anderen Koppel-Losrad separat ausgebildetes Element sein, das bspw. als Ringelement ausgebildet ist und drehfest (bspw. über eine Passverzahnung) mit dem anderen Koppel-Losrad drehfest verbunden ist. Das Überbrückungsglied kann jedoch auch einstückig mit dem anderen Koppel-Losrad ausgebildet sein.

Gemäß der Erfindung nach dem unabhängigen Anspruch 2 weist das andere der Koppel-Losräder einen Wellenlagerabschnitt auf, mittels dessen das andere der Koppel-Losräder an der zugeordneten Ausgangswelle drehbar gelagert ist, wobei das andere der Koppel-Losräder ferner einen mit dem Wellenlagerabschnitt verbundenen Radabschnitt aufweist, an dessen Außenumfang eine Verzahnung ausgebildet ist und der axial versetzt zu dem Wellenlagerabschnitt ausgebildet ist, wobei die Freilauf-Koppeleinrichtung radial innerhalb des Radabschnittes und/oder axial ausgerichtet mit dem Radabschnitt angeordnet ist.

Hierdurch kann insbesondere eine axial kompakte Bauweise erzielt werden.

Insgesamt ist es vorteilhaft, wenn die Gangstufe, die in dem Teilgetriebe, das den ungeraden Gangstufen zugeordnet ist, die kleinste Übersetzung aufweist, die Gangstufe 3 ist.

Das Teilgetriebe, das den ungeraden Gangstufen zugeordnet ist, weist mit anderen Worten keinen ausschließlich für eine Vorwärts-Gangstufe 1 vorgesehenen Radsatz auf. Die Vorwärts-Gangstufe 1 wird bei diesem Doppelkupplungsgetriebe vorzugsweise als Windungsgangstufe realisiert.

Auch ist es insgesamt vorteilhaft, wenn wenigstens einem der Koppel-Losräder eine Schaltkupplungsanordnung zugeordnet ist, um das Koppel-Losrad mit der anderen Ausgangswelle zu verbinden.

Bei dieser Ausführungsform dient das eine Koppel-Losrad als Gang-Losrad, das auch zur Einrichtung einer Gangstufe des Doppelkupplungsgetriebes ausgebildet ist, vorzugsweise die Vorwärts-Gangstufen 5 und/oder 6, wie oben beschrieben.

Die Freilauf-Koppeleinrichtung bildet vorzugsweise mit dem Koppel-Losrad, in das die Leistung bei Einrichtung der Windungsgangstufe als erstes geleitet wird, eine Montageeinheit.

Insbesondere kann ein Innenglied der Freilauf-Koppeleinrichtung eine Montageeinheit mit einem Schulterabschnitt dieses Koppel-Losrades bilden.

Es versteht sich, dass bei Verwendung einer solchen Freilauf-Koppeleinrichtung in der Windungsgangstufe im Schubbetrieb keine Bremswirkung über den Antriebsmotor erzielbar ist, da in diesem Fall die Überrollwirkung des Freilaufes eintritt.

Ferner ist es bevorzugt, wenn eine stete treibende Verbindung von dem ersten Koppel-Losrad auf das zweite Koppel-Losrad dann unterbrochen wird, wenn die Reibkupplung geöffnet wird, die dem Teilgetriebe zugeordnet ist, dem das erste Koppel-Losrad zugeordnet ist.

Die erste Eingangswelle ist vorzugsweise eine Hohlwelle und erstreckt sich in axialer Richtung etwa bis zur axialen Mitte des Doppelkupplungsgetriebes. Die zweite Eingangswelle ist vorzugsweise eine Innenwelle, die sich von den Reibkupplungen in axialer Richtung über die erste Eingangswelle hinaus erstreckt, vorzugsweise bis zum gegenüberliegenden axialen Ende des Doppelkupplungsgetriebes.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahrzeug mit einer Ausführungsform eines erfindungsgemäßen Doppelkupplungsgetriebes;
- Fig. 2: eine schematische Längsschnittansicht durch ein Detail einer weiteren Ausführungsform eines erfindungsgemäßen Doppelkupplungsgetriebes; und
- Fig. 3: eine der Fig. 2 vergleichbare Darstellung einer weiteren Ausführungsform eines erfindungsgemäßen Doppelkupplungsgetriebes.

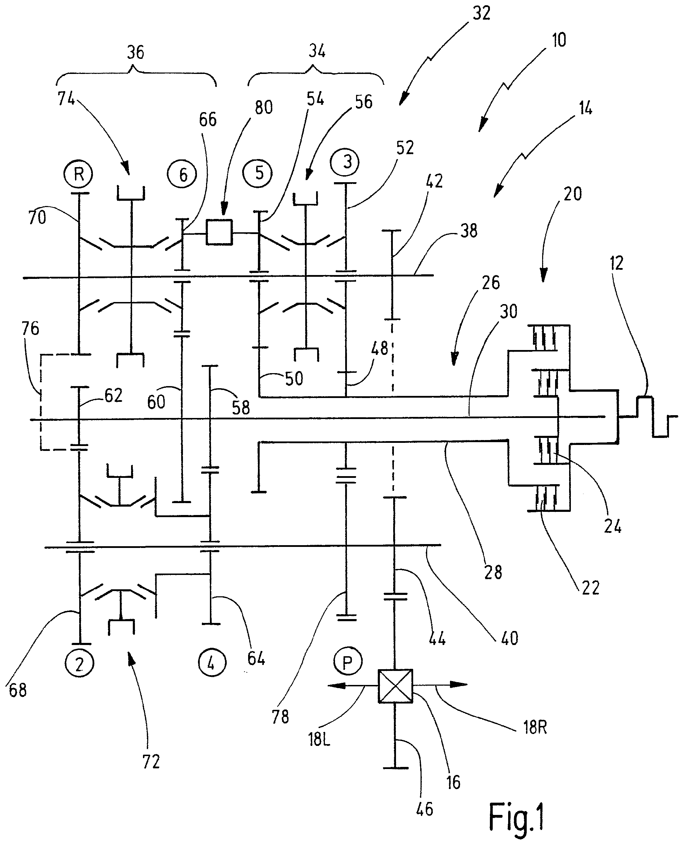

In Fig. 1 ist ein Antriebsstrang für ein Kraftfahrzeug schematisch dargestellt und generell mit 10 bezeichnet.

Der Antriebsstrang 10 beinhaltet einen Antriebsmotor 12, wie einen Verbrennungsmotor oder eine Hybrid-Antriebseinheit. Ferner weist der Antriebsstrang 10 ein Doppelkupplungsgetriebe 14 auf, das eingangsseitig mit dem Antriebsmotor 12 verbunden ist und das ausgangsseitig mit einem Differential 16 verbunden ist, mittels dessen Antriebsleistung auf angetriebene Räder 18L, 18R verteilbar ist.

Das Doppelkupplungsgetriebe 14 beinhaltet eine Reibkupplungsanordnung 20, die eine erste Reibkupplung 22 und eine zweite Reibkupplung 24 aufweist. Eingangsglieder der zwei Reibkupplungen 22, 24 sind mit dem Antriebsmotor 12 verbunden. Die Ausgangsglieder der Reibkupplungen 22, 24 sind mit einer Eingangswellenanordnung 26 verbunden. Dabei ist das Ausgangsglied der ersten Reibkupplung 22 mit einer ersten Eingangswelle 28 in Form einer Hohlwelle verbunden. Das Ausgangsglied der zweiten Reibkupplung 24 ist mit einer zweiten Eingangswelle 30 der Eingangswellenanordnung 26 verbunden, die als Innenwelle ausgebildet ist.

Das Doppelkupplungsgetriebe 14 beinhaltet ferner ein Stufengetriebe 32 in Vorgelegebauweise, das ein erstes Teilgetriebe 34 für die ungeraden Gangstufen und ein zweites Teilgetriebe 36 für die geraden Gangstufen sowie für die Rückwärts-Gangstufe R aufweist. Die hier erwähnte Rückwärts-Gangstufe R ist eine herkömmliche Rückwärts-Gangstufe ohne Windungs-Leistungsfluss.

Die erste Reibkupplung 22, die erste Eingangswelle 28 und das erste Teilgetriebe 34 bilden einen ersten Leistungsübertragungszweig von dem Antriebsmotor 12 zu dem Differential 16. Die zweite Reibkupplung 24, die zweite Eingangswelle 30 und das zweite Teilgetriebe 36 bilden einen zweiten Leistungsübertragungszweig.

Das Doppelkupplungsgetriebe 14 ist für den Front-Quer-Einbau in einem Kraftfahrzeug ausgelegt und weist parallel zu der Eingangswellenanordnung 26 eine erste Ausgangswelle 38 und eine zweite Ausgangswelle 40 auf. Die erste Ausgangswelle 38 ist mit einem ersten Abtriebsrad 42 drehfest verbunden. Die zweite Ausgangswelle 40 ist mit einem zweiten Abtriebsrad 44 drehfest verbunden. Die Abtriebsräder 42, 44 stehen jeweils in Eingriff mit einem Eingangsglied 46 des Differentials 16. Die Abtriebsräder 42, 44 sind vorzugsweise auf der dem Antriebsmotor 12 zugewandten Seite des Stufengetriebes 32 angeordnet.

Das erste Teilgetriebe 34 beinhaltet ein Festrad 48 für die Vorwärts-Gangstufe 3, das an der ersten Eingangswelle 28 festgelegt ist, sowie ein Festrad 50 für die Vorwärts-Gangstufe 5, das ebenfalls an der ersten Eingangswelle 28 festgelegt ist.

An der ersten Ausgangswelle 38 ist ein Losrad 52 für die Vorwärts-Gangstufe 3 drehbar gelagert. Ferner ist an der ersten Ausgangswelle 38 ein Losrad 54 für die Vorwärts-Gangstufe 5 drehbar gelagert. In axialer Richtung zwischen den Losrädern 52, 54 ist eine Schaltkupplungsanordnung 56 für die Vorwärts-Gangstufen 3/5 an der ersten Ausgangswelle 38 angeordnet. Die Schaltkupplungsanordnung 56 ist als Schaltkupplungspaket mit zwei Schaltkupplungen (insbesondere Synchron-Schaltkupplungen) aufgebaut und ist über ein nicht näher bezeichnetes Schaltglied wie eine Schaltmuffe betätigbar. Das Festrad 48 und das Losrad 52 bilden einen Radsatz für die Vorwärts-Gangstufe 3. Das Festrad 50 und das Losrad 54 bilden einen Radsatz für die Vorwärts-Gangstufe 5.

Das zweite Teilgetriebe 36 beinhaltet ein Festrad 58 für die Vorwärts-Gangstufe 4, ein Festrad 60 für die Vorwärts-Gangstufe 6 sowie ein Festrad 62 für die Vorwärts-Gangstufe 2, wobei diese Festräder sämtlich an der zweiten Eingangswelle 30 festgelegt sind. Das zweite Teilgetriebe 36 beinhaltet ferner ein Losrad 64 für die Vorwärts-Gangstufe 4, das drehbar an der zweiten Ausgangswelle 40 gelagert ist, sowie ein Losrad 66 für die Vorwärts-Gangstufe 6, das an der ersten Ausgangswelle 38 drehbar gelagert ist. Ferner beinhaltet das zweite Teilgetriebe 36 ein Losrad 68 für die Vorwärts-Gangstufe 2, das an der zweiten Ausgangswelle 40 drehbar gelagert ist, sowie ein Losrad 70 für die Rückwärts-Gangstufe R, das an der ersten Ausgangswelle 38 drehbar gelagert ist.

Das Festrad 58 und das Losrad 64 bilden einen Radsatz für die Vorwärts-Gangstufe 4. Das Festrad 60 und das Losrad 66 bilden einen Radsatz für die Vorwärts-Gangstufe 6. Das Festrad 62 und das Losrad 68 bilden einen Radsatz für die Vorwärts-Gangstufe 2. Das Losrad 70 ist in axialer Richtung mit dem Radsatz für die Vorwärts-Gangstufe 2 ausgerichtet und steht vorzugsweise in Dreheingriff mit dem Losrad 68 der Vorwärts-Gangstufe 2. Die Rückwärts-Gangstufe R kann folglich ohne separate Drehrichtungsumkehr-Welle realisiert werden.

In axialer Richtung zwischen dem Losrad 64 und dem Losrad 68 ist an der zweiten Ausgangswelle 40 eine Schaltkupplungsanordnung 72 für die Gangstufen 2/4 angeordnet. In axialer Richtung zwischen den Losrädern 66, 70 ist an der ersten Ausgangswelle 38 eine Schaltkupplungsanordnung 74 für die Gangstufen R/6 angeordnet. Die Schaltkupplungsanordnungen 72, 74 sind axial miteinander ausgerichtet.

An der zweiten Ausgangswelle 40 ist, in axialer Ausrichtung mit dem Radsatz 48, 52 für die Vorwärts-Gangstufe 3, ein Parksperrenrad 78 festgelegt.

Das erste Teilgetriebe 34 weist keinen Radsatz auf, der ausschließlich einer Vorwärts-Gangstufe 1 zugeordnet ist. Die Vorwärts-Gangstufe 1 wird bei dem Doppelkupplungsgetriebe 14 als Windungsgangstufe realisiert.

Zu diesem Zweck sind die Losräder 54 für die Vorwärts-Gangstufe 5 und 66 für die Vorwärts-Gangstufe 6 über eine Freilauf-Koppeleinrichtung 80 miteinander verbunden. Die Freilauf-Koppeleinrichtung 80 ist in Fig. 1 lediglich schematisch angedeutet. Die Freilauf-Koppeleinrichtung 80 ist so ausgelegt, dass das Losrad 66 für die Vorwärts-Gangstufe 6 bei einer Drehung des Losrades 54 der Vorwärts-Gangstufe 5 (in Antriebsrichtung zur Einrichtung eines Vorwärts-Fahrbetriebes) mitgenommen wird. Andererseits kann das Losrad 66 schneller drehen als das Losrad 54, wobei die Überrollwirkung der Freilauf-Koppeleinrichtung 80 eintritt.

Bei einem Fahrbetrieb in der Vorwärts-Gangstufe 5, bei dem die erste Reibkupplung 22 geschlossen ist und die zweite Reibkupplung 24 geöffnet ist, schleppt das Losrad 54 das Losrad 66 folglich mit. Bei einem Fahrbetrieb in der Vorwärts-Gangstufe 6, wobei die zweite Reibkupplung 24 geschlossen ist und die erste Reibkupplung 22 geöffnet ist, nimmt das Losrad 66 das Losrad 54 nicht mit sondern "überrollt" dieses.

Die Vorwärts-Gangstufe 1, die gewöhnlich zum Anfahren mit dem Antriebsstrang 10 verwendet wird, ist, wie erläutert, durch eine Windungsgangstufe einrichtbar.

Hierbei wird die dem Radsatz 62, 68 zugeordnete Schaltkupplung der Schaltkupplungsanordnung 72 geschlossen, so dass die Gangstufe 2 eingelegt ist. Zum Anfahren wird nun jedoch nicht die den geraden Gangstufen zugeordnete Reibkupplung 24 geschlossen, sondern die den ungeraden Gangstufen zugeordnete Reibkupplung 22. Hierdurch wird das Losrad 54 in Drehung versetzt, wodurch das Losrad 66 der Vorwärts-Gangstufe 6 in dieser Drehrichtung mitgenommen wird. Hierdurch wird die zweite Eingangswelle 30 über das Festrad 60 angetrieben, so dass Antriebsleistung in der Folge über das Festrad 62 und das geschaltete Losrad 68 der Vorwärts-Gangstufe 2 auf die zweite Ausgangswelle 40 übertragen werden kann.

Bei diesem Fahrbetrieb in der Windungs-Vorwärts-Gangstufe 1 hat die zweite Eingangswelle 30 eine niedrigere Drehzahl als die erste Eingangswelle 28, bedingt durch das Übersetzungsverhältnis zwischen den Vorwärts-Gangstufen 5 und 6, die hierbei über die Freilauf-Koppeleinrichtung 80 miteinander gekoppelt sind.

Folglich kann über den Radsatz 62, 68 der Vorwärts-Gangstufe 2 aufgrund der niedrigeren Drehzahl ein Fahrbetrieb in einer "virtuellen" Windungs-Vorwärts-Gangstufe 1 realisiert werden. Ferner kann eine zusätzliche Rückwärts-Gangstufe realisiert werden. Während die "normale" Rückwärts-Gangstufe eingerichtet wird, indem die Reibkupplung 24 geschlossen wird und die der Rückwärtsgangstufe R zugeordnete Schaltkupplung der Schaltkupplungsanordnung 74 geschlossen wird, so dass der Leistungsfluss von der zweiten Eingangswelle 30 über das Festrad 62 und das Losrad 70 auf die erste Ausgangswelle 38 übertragen wird, kann die weitere Rückwärts-Gangstufe wie folgt eingerichtet werden. Hierbei wird die erste Reibkupplung 22 geschlossen, die zweite Reibkupplung 24 wird geöffnet. Über die Koppeleinrichtung 80 wird die zweite Eingangswelle 30 angetrieben (mit einer anderen Drehzahl als sich die erste Eingangswelle 28 dreht, jedoch in der gleichen Drehrichtung). Wenn nun auch die der Rückwärtsgangstufe R zugeordnete Schaltkupplung der Schaltkupplungsanordnung 74 geschlossen wird, wird Leistung wiederum über das Festrad 62 und die Kopplung 76 mit dem Losrad 70 der Rückwärts-Gangstufe R auf die erste Ausgangswelle 38 übertragen.

Im Ergebnis können sich so zwei Rückwärtsgangstufen mit unterschiedlichen Übersetzungen ergeben. Die Übersetzungen können dabei beispielsweise so gewählt sein, dass eine der Übersetzungen als sehr kurze Übersetzung gewählt ist, die ausschließlich für ein Anfahren am Berg oder dergleichen ausgelegt ist, wohingegen die andere Übersetzung als normale Rückwärts-Gangstufenübersetzung ausgelegt ist. Gegebenenfalls ist auch denkbar, eine der Übersetzungen länger zu machen als eine üblicherweise für die Rückwärts-Gangstufe gewählte Übersetzung.

Die Freilauf-Koppeleinrichtung 80 ist vorzugsweise das einzige Element mit Freilauf-Eigenschaft des Stufengetriebes 32.

Die Kopplung der zwei Losräder 54, 66 über die Freilauf-Koppeleinrichtung 80 kann auf konstruktiv beliebige Art und Weise erfolgen. Nachstehend werden zwei bevorzugte Ausführungsformen hierfür erläutert.

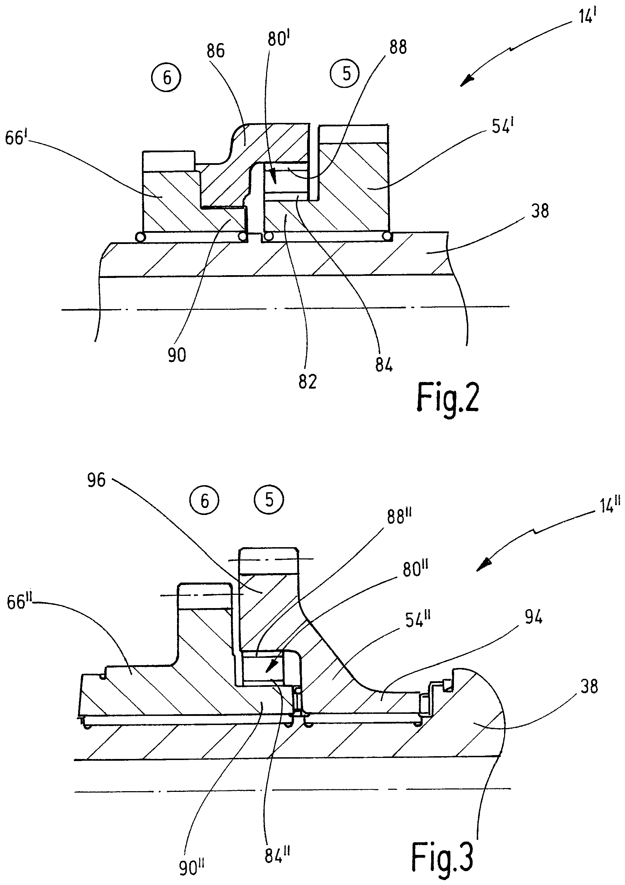

In den Figuren 2 und 3 sind jeweils schematische Detail-Längsschnittansichten von Doppelkupplungsgetrieben gezeigt, die hinsichtlich Aufbau und Funktionsweise generell dem Doppelkupplungsgetriebe 14 der Fig. 1 entsprechen können. Gleiche Elemente sind daher durch gleiche Bezugszeichen gekennzeichnet. Im Folgenden werden im Wesentlichen die Unterschiede erläutert.

Bei dem in Fig. 2 gezeigten Doppelkupplungsgetriebe 14' weist das Losrad 54' für die Vorwärts-Gangstufe 5 einen sich in axialer Richtung hin zu dem Losrad 66' erstreckenden Schulterabschnitt 82 auf. Die Freilauf-Koppeleinrichtung 80' weist ein Innenglied 84 auf, das am Außenumfang des Schulterabschnittes 82 angeordnet und drehfest hiermit verbunden ist. Die Freilauf-Koppeleinrichtung 80' und das Losrad 54' können hierbei eine Montageeinheit bilden, die als vormontierte Einheit bei der Montage des Getriebes verwendbar ist.

Ferner ist ein Überbrückungsglied 86 vorgesehen, das den Schulterabschnitt 82 axial übergreift, derart, dass ein Außenglied 88 der Freilauf-Koppeleinrichtung 80' mit einem Innenumfangsabschnitt des Überbrückungsgliedes 86 verbunden werden kann. Die Verbindung ist insbesondere eine drehfeste Verbindung, bspw. über eine Passverzahnung. Hierbei kann die vormontierte Einheit aus Losrad 54' und Freilauf-Koppeleinrichtung 80' bspw. bei der Montage axial auf das Überbrückungsglied 86 aufgeschoben werden.

Das Überbrückungsglied 86 ist drehfest mit dem Losrad 66' der Vorwärts-Gangstufe 6 verbunden. Das Überbrückungsglied 86 kann einstückig mit dem Losrad 66' verbunden sein. Vorliegend ist jedoch dargestellt, dass das Losrad 66' einen zu dem Losrad 54' hinweisenden Schulterabschnitt 90 aufweist, an dessen Außenumfang das Überbrückungsglied 86 drehfest festgelegt ist. Das Überbrückungsglied 86 kann hierbei im Längsschnitt eine gekröpfte Form aufweisen. Das Überbrückungsglied 86 ist generell als Ringelement ausgebildet.

Eine alternative Ausführungsform eines Doppelkupplungsgetriebes 14" ist in Fig. 3 dargestellt.

Hier weist das Losrad 66" für die Vorwärts-Gangstufe 6 einen sich hin zu dem Losrad 54" für die Vorwärts-Gangstufe 5 erstreckenden Schulterabschnitt 90" auf, an dessen Außenumfang ein Innenglied 84" einer Freilauf-Koppeleinrichtung 80" drehfest festgelegt ist.

Das Losrad 54" weist axial benachbart zu dem Schulterabschnitt 90" einen Wellenlagerabschnitt 94 auf, mittels dessen das Losrad 54" drehbar an der ersten Ausgangswelle 38 gelagert ist. Ferner weist das Losrad 54" einen Radabschnitt 96 auf, der vorzugsweise einstückig mit dem Wellenlagerabschnitt 94 ausgebildet ist und an dessen Außenumfang eine Verzahnung ausgebildet ist, zum Eingriff mit dem Festrad 50.

Der Radabschnitt 96 übergreift den Schulterabschnitt 90" in axialer Richtung und weist einen Innenumfangsabschnitt auf, der mit einem Außenglied 88" der Freilauf-Koppeleinrichtung 80" drehfest verbunden ist.

Bei dem Doppelkupplungsgetriebe 14" können die Verzahnungen der Losräder 66", 54" axial direkt benachbart zueinander angeordnet werden.

## Patentansprüche

1. Doppelkupplungsgetriebe (14, 14') mit einer ersten Reibkupplung (22), einer zweiten Reibkupplung (24), einem ersten Teilgetriebe (34) und einem zweiten Teilgetriebe (36), wobei die erste Reibkupplung (22) und das erste Teilgetriebe (34) einen ersten Leistungsübertragungszweig bilden und wobei die zweite Reibkupplung (24) und das zweite Teilgetriebe (36) einen zweiten Leistungsübertragungszweig bilden, ferner mit einer Eingangswellenanordnung (26) und zwei hierzu parallelen Ausgangswellen (38, 40), wobei die Eingangswellenanordnung (26) eine erste, dem ersten Leistungsübertragungszweig zugeordnete Eingangswelle (28) und eine zweite, dem zweiten Leistungsübertragungszweig zugeordnete Eingangswelle (30) aufweist, wobei wenigstens eine Gangstufe (1) als Windungsgangstufe ausgebildet ist, bei der ein Leistungsfluss von einer (28) der Eingangswellen (28, 30) zu einer (40) der Ausgangswellen (38, 40) so eingerichtet ist, indem Leistung von der einen Eingangswelle (28) zunächst über die andere Ausgangswelle (38) und weiter über die andere Eingangswelle (30) auf die eine Ausgangswelle (40) geleitet wird, wobei an der anderen Ausgangswelle (38) zwei Koppel-Losräder (54, 54', 66, 66') gelagert sind, die unterschiedlichen Teilgetrieben zugeordnet sind und die über eine Koppeleinrichtung (80, 80') miteinander koppelbar sind, wobei die Koppeleinrichtung als Freilauf-Koppeleinrichtung (80, 80') ausgebildet ist, **dadurch gekennzeichnet, dass** eines (54, 54') der Koppel-Losräder einen sich in axialer Richtung erstreckenden Schulterabschnitt (82) aufweist, an dessen Außenumfang ein Innenglied (84) der Freilauf-Koppeleinrichtung (80, 80') festgelegt ist, wobei ein Außenglied (88) der Freilauf-Koppeleinrichtung (80, 80') in Bezug auf das andere (66, 66') der Koppel-Losräder festgelegt ist, und wobei das andere (66, 66') der Koppel-Losräder mit einem Überbrückungsglied (86) drehfest verbunden ist, das die Freilauf-Koppeleinrichtung (80, 80') übergreift, wobei das Außen-glied (88) der Freilauf-Koppeleinrichtung (80, 80') an einem Innenumfangsabschnitt des Überbrückungsgliedes (86) festgelegt ist.

2. Doppelkupplungsgetriebe (14, 14") mit einer ersten Reibkupplung (22), einer zweiten Reibkupplung (24), einem ersten Teilgetriebe (34) und einem zweiten Teil-getriebe (36), wobei die erste Reibkupplung (22) und das erste Teilgetriebe (34) einen ersten Leistungsübertragungszweig bilden und wobei die zweite Reibkupplung (24) und das zweite Teilgetriebe (36) einen zweiten Leistungsübertragungszweig bilden, ferner mit einer Eingangswellenanordnung (26) und zwei hierzu parallelen Ausgangswellen (38, 40), wobei die Eingangswellenanordnung (26) eine erste, dem ersten Leistungsübertragungszweig zugeordnete Eingangswelle (28) und eine zweite, dem zweiten Leistungsübertragungszweig zugeordnete Eingangswelle (30) aufweist, wobei wenigstens eine Gangstufe (1) als Windunggangstufe ausgebildet ist, bei der ein Leistungsfluss von einer (28) der Eingangswellen (28, 30) zu einer (40) der Ausgangswellen (38, 40) so eingerichtet ist, indem Leistung von der einen Eingangswelle (28) zunächst über die andere Ausgangswelle (38) und weiter über die andere Eingangswelle (30) auf die eine Ausgangswelle (40) geleitet wird, wobei an der anderen Ausgangswelle (38) zwei Koppel-Losräder (54, 54", 66, 66") gelagert sind, die unterschiedlichen Teilgetrieben zugeordnet sind und die über eine Koppeleinrichtung (80, 80") miteinander koppelbar sind, wobei die Koppeleinrichtung als Freilauf-Koppel einrichtung (80, 80") ausgebildet ist, **dadurch gekennzeichnet, dass** eines (66, 66") der Koppel-Losräder einen sich in axialer Richtung erstre-ckenden Schulterabschnitt (90") aufweist, an dessen Außenumfang ein Innen-glied (84") der Freilauf-Koppeleinrichtung (80, 80") festgelegt ist, wobei ein Außenglied (88") der Freilauf-Koppeieinrichtung (80, 80") in Bezug auf das andere (54, 54") der Koppel-Losräder festgelegt ist, und wobei das andere (54, 54") der Koppel-Losräder einen Wellenlagerabschnitt (94) aufweist, mittels dessen das andere (54, 54") der Koppel-Losräder an der zugeordneten Ausgangswelle (38) drehbar gelagert ist, und einen mit dem Wellenlagerabschnitt (94) verbundenen Radabschnitt (96) aufweist, an dessen Außenumfang eine Verzahnung ausgebildet ist und der axial versetzt zu dem Wellenlagerabschnitt (94) ausgebildet ist, wobei die Freilauf-Koppeleinrichtung (80, 80") radial innerhalb des Radabschnittes (96) und/oder axial ausgerichtet mit dem Radabschnitt (96) angeordnet ist.

3. Doppelkupplungsgetriebe nach Anspruch 1 oder 2, **dadurch gekennzeichnet, dass** eine Anfahr-Gangstufe (1) als Windungsgangstufe ausgebildet ist, wobei die zwei Koppel-Losräder (54, 54', 54", 66, 66', 66") so ausgewählt sind, dass die Drehzahl an der einen Eingangswelle (28) größer als die Drehzahl an der anderen Eingangswelle (30) ist, wenn die Koppel-Losräder (54, 54', 54", 66, 66', 66") gekoppelt sind.

4. Doppelkupplungsgetriebe nach Anspruch 3, **dadurch gekennzeichnet, dass** zur Einrichtung der Anfahr-Gangstufe (1) an der einen Ausgangswelle (40) ein Losrad (68) in den Leistungsfluss geschaltet ist, das einer zweiten Gangstufe (2) zugeordnet ist.

5. Doppelkupplungsgetriebe nach einem der Ansprüche 1 - 4, **dadurch gekennzeichnet, dass** ein erstes Koppel-Losrad (54, 54', 54") der Koppel-Losräder (54, 54', 54", 66, 66', 66") einer Gangstufe (5) des ersten Teilgetriebes (34) zugeordnet ist, wobei ein zweites Koppel-Losrad (66, 66', 66") der Koppel-Losräder (54, 54', 54", 66, 66', 66") einer Gangstufe (6) des zweiten Teilgetriebes (36) zugeordnet ist.

6. Doppelkupplungsgetriebe nach einem der Ansprüche 1 - 5, **dadurch gekennzeichnet, dass** die Gangstufe, die in dem Teilgetriebe (34), das den ungeraden Gangstufen zugeordnet ist, die kleinste Übersetzung aufweist, die Gangstufe 3 ist.

7. Doppelkupplungsgetriebe nach einem der Ansprüche 1 - 6, **dadurch gekennzeichnet, dass** wenigstens einem der Koppel-Losräder (54, 54', 54", 66, 66', 66") eine Schaltkupplungsanordnung (56, 74) zugeordnet ist, um das Koppel-Losrad (54, 54', 54", 66, 66', 66") mit der anderen Ausgangswelle (38) zu verbinden.

8. Verfahren zum Anfahren mittels einer Anfahr-Gangstufe (1) in einem Doppelkupplungsgetriebe (14) nach einem der Ansprüche 1 - 7, mit den von einem Zustand ausgehenden Schritten, bei dem die erste und die zweite Reibkupplung (22, 24) geöffnet sind:
- Schließen einer Schaltkupplung einer Gangstufe (2) in jenem Teilgetriebe (36), das den geraden Gangstufen zugeordnet ist, wobei die Schaltkupplung an der einen Ausgangswelle (40) angeordnet ist,
- Schließen der Reibkupplung (22), die den ungeraden Gangstufen zugeordnet ist, so dass Leistung zum Anfahren von der den ungeraden Gangstufen zugeordneten Eingangswelle (28) auf eines (54, 54', 54") der Koppel-Losräder (54, 54', 54", 66, 66', 66") übertragen wird, wobei die Leistung dann über die Freilauf-Koppeleinrichtung (80, 80', 80") auf das andere Koppel-Losrad (66, 66', 66") übertragen wird, von wo aus die Leistung über die andere Eingangswelle (30) und die geschlossene Schaltkupplung auf die eine Ausgangswelle (40) übertragen wird.

## Claims

1. Dual clutch transmission (14, 14') with a fist friction clutch (22), a second friction clutch (24), a first partial transmission (34) and a second partial transmission (36), wherein the first friction clutch (22) and the first partial transmission (34) form a first power transmission path and wherein the second friction clutch (24) and the second partial transmission (36) form a second power transmission path, further comprising an input shaft arrangement (26) and two output shafts (38, 40) parallel thereto, wherein the input shaft arrangement (26) has a first input shaft (28) related to the first power transmission path and a second input shaft (30) related to the second power transmission path, wherein at least one gear is a winding gear, wherein a power flow from one (28) of the input shafts (28, 30) to one (40) of the output shafts (38, 40) is arranged so that power is transferred from the one input shaft (28) initially via the other output shaft (38) and further via the other input shaft (30) to the one output shaft (40), wherein on the other output shaft (38) two coupling idler gear wheels (54, 54', 66, 66') are seated which are assigned to different partial transmissions and which can be coupled by a coupling device (80, 80'), wherein the coupling device is formed as an idler coupling device (80, 80'), **characterized in that** one (54, 54') of the idler gear wheels comprises a shoulder portion (82) extending in axial direction, wherein an input member (84) of the idler coupling device (80, 80') is locked on an outer circumference of the shoulder portion, wherein an output member (88) of the idler coupling device (80, 80') is locked with respect to the other (66, 66') of the idler gear wheels, and wherein the other (66, 66') of the idler gear wheels is non-rotatably connected to a bridging member (86) which arcs the idler coupling device (80, 80'), wherein the output member (88) of the idler coupling device (80, 80') is locked on an inner circumferential portion of the bridging member (86).

2. Dual clutch transmission (14, 14') with a fist friction clutch (22), a second friction clutch (24), a first partial transmission (34) and a second partial transmission (36), wherein the first friction clutch (22) and the first partial transmission (34) form a first power transmission path and wherein the second friction clutch (24) and the second partial transmission (36) form a second power transmission path, further comprising an input shaft arrangement (26) and two output shafts (38, 40) parallel thereto, wherein the input shaft arrangement (26) has a first input shaft (28) related to the first power transmission path and a second input shaft (30) related to the second power transmission path, wherein at least one gear is a winding gear, wherein a power flow from one (28) of the input shafts (28, 30) to one (40) of the output shafts (38, 40) is arranged so that power is transferred from the one input shaft (28) initially via the other output shaft (38) and further via the other input shaft (30) to the one output shaft (40), wherein on the other output shaft (38) two coupling idler gear wheels (54, 54", 66, 66") are seated which are assigned to different partial transmissions and which can be coupled by a coupling device (80, 80"), wherein the coupling device is formed as an idler coupling device (80, 80"), **characterized in that** one (54, 54") of the idler gear wheels comprises a shoulder portion (90") extending in axial direction, wherein an input member (84") of the idler coupling device (80, 80") is locked on an outer circumference of the shoulder portion, wherein an output member (88") of the idler coupling device (80, 80") is locked with respect to the other (54, 54") of the idler gear wheels, and wherein the other (54, 54") of the idler gear wheels comprises a shaft bearing portion (94) by means of which the other (54, 54") of the idler gear wheels is pivoted on the output shaft (38) assigned thereto, and comprises a wheel portion (96) connected to the shaft bearing portion (94), wherein a gearing is formed on the outer circumference of the wheel portion, and the wheel portion is axially offset with regard to the shaft bearing portion (94), wherein the idler coupling device (80, 80") is arranged radially inside the wheel portion (94) and/or axially aligned to the wheel portion (96).

3. Dual clutch transmission according to claim 1 or 2, **characterized in that** a starting gear (1) is formed as winding gear, wherein the two idler gearwheels (54, 54', 54", 66, 66', 66") are chosen so that the speed on the one input shaft (28) is larger than the speed on the other input shaft (30), when the idler gearwheels (54, 54', 54", 66, 66', 66") are coupled.

4. Dual clutch transmission according to claim 3, **characterized in that** for arrangement of the starting gear (1) an idler gear (68) on the one output shaft (40) is connected into the power flow which is assigned to the second gear (2).

5. Dual clutch transmission according to one of claims 1 to 4, **characterized in that** a first idler gear wheel (54, 54', 54") of the idler gear wheels (54, 54', 54", 66, 66', 66") is assigned to a gear (5) of the first partial transmission (34), wherein a second idler gear wheel (66, 66', 66") of the idler gear wheels (54, 54', 54", 66, 66', 66") is assigned to a gear (6) of the second partial transmission (34).

6. Dual clutch transmission according to one of claims 1 to 5, **characterized in that** the gear which has the smallest gear ratio in the partial transmission assigned to the odd gears is gear 3.

7. Dual clutch transmission according to one of claims 1 to 6, **characterized in that** at least one of the idler gear wheels (54, 54', 54", 66, 66', 66") is assigned to a shifting clutch (56, 74) to connect the idler gear wheel (54, 54', 54", 66, 68', 66") to the other output shaft (38).

8. Method for starting with a starting gear (1) in a dual clutch transmission (14) according to one of claims 1 to 7, with the steps based on a state of the first and the second friction clutches (22, 24) are open:
- closing of a shifting clutch of a gear (2) in that partial transmission (36) which is assigned to the even gears, wherein the shifting clutch is arranged on the one output shaft (40),
- closing of the friction clutch (22) which is assigned to the odd gears. so that power for starting from the input shaft (28) assigned to the odd gears is transferred to one (54, 54', 54") of the idler gear wheels (54, 54', 54", 66, 66', 66"), whereby the power then is transferred via the idler coupling device (80, 80', 80") on the other idler gear wheel (66, 66', 66"), from where the power is transferred via the other input shaft (30) and the closed shifting clutch to the one output shaft (40).

## Revendications

1. Transmission (14, 14') à double embrayage présentant un premier embrayage à frottement (22), un deuxième embrayage à frottement (24), une première transmission partielle (34) et une deuxième transmission partielle (36),
le premier embrayage à frottement (22) et la première transmission partielle (34) formant une première branche de transfert de puissance et le deuxième embrayage à frottement (24) et la deuxième transmission partielle (36) formant une deuxième branche de transfert de puissance,
la transmission présentant en outre un ensemble (26) d'arbres d'entrée et deux arbres de sortie (38, 40) qui leur sont parallèles, l'ensemble (26) d'arbres d'entrée présentant un premier arbre d'entrée (28) associé à la première branche de transfert de puissance et un deuxième arbre d'entrée (30) associé à la deuxième branche de transfert de puissance,
au moins un rapport de transmission (1) étant configuré comme rapport de transmission à enroulement dans lequel la puissance délivrée par l'un (28) des arbres d'entrée (28, 30) est appliquée sur l'un (40) des arbres de sortie (38, 40) en amenant d'abord la puissance d'un (28) des arbres d'entrée par l'intermédiaire de l'autre arbre de sortie (38) et ensuite par l'autre arbre d'entrée (30) sur l'un (40) des arbres de sortie, deux roues libres d'accouplement (54, 54'; 66, 66') étant montées sur l'autre arbre de sortie (38), étant associées à des transmissions partielles différentes et pouvant être accouplées l'une à l'autre par l'intermédiaire d'un dispositif d'accouplement (80, 80'), le dispositif d'accouplement étant configuré comme dispositif (80, 80') d'accouplement à roues libres, **caractérisée en ce que**
l'une (54, 54') des roues libres d'accouplement présente une partie d'épaulement (82) qui s'étend dans la direction axiale et à la périphérie extérieure de laquelle est fixé un organe intérieur (84) du dispositif (80, 80') d'accouplement à roues libres,
**en ce qu'**un organe d'extérieur (88) du dispositif (80, 80') d'accouplement à roues libres est fixé par rapport à l'autre (66, 66') des roues libres d'accouplement,
**en ce que** l'autre (66, 66') des roues libres d'accouplement est reliée à rotation solidaire à un organe de pontage (86) qui chevauche le dispositif (80, 80') d'accouplement à roues libres et
**en ce que** l'organe extérieur (88) du dispositif (80, 80') d'accouplement à roues libres est fixé sur la partie périphérique extérieure de l'organe de pontage (86).

2. Transmission (14, 14") à double embrayage présentant un premier embrayage à frottement (22), un deuxième embrayage à frottement (24), une première transmission partielle (34) et une deuxième transmission partielle (36),
le premier embrayage à frottement (22) et la première transmission partielle (34) formant une première branche de transfert de puissance et le deuxième embrayage à frottement (24) et la deuxième transmission partielle (36) formant une deuxième branche de transfert de puissance,
la transmission présentant en outre un ensemble (26) d'arbres d'entrée et deux arbres de sortie (38, 40) qui leur sont parallèles, l'ensemble (26) d'arbres d'entrée présentant un premier arbre d'entrée (28) associé à la première branche de transfert de puissance et un deuxième arbre d'entrée (30) associé à la deuxième branche de transfert de puissance,
au moins un rapport de transmission (1) étant configuré comme rapport de transmission à enroulement dans lequel la puissance délivrée par l'un (28) des arbres d'entrée (28, 30) est appliquée sur l'un (40) des arbres de sortie (38, 40) en amenant d'abord la puissance d'un (28) des arbres d'entrée par l'intermédiaire de l'autre arbre de sortie (38) et ensuite par l'autre arbre d'entrée (30) sur l'un (40) des arbres de sortie, deux roues libres d'accouplement (54, 54"; 66, 66") étant montées sur l'autre arbre de sortie (38), étant associées à des transmissions partielles différentes et pouvant être accouplées l'une à l'autre par l'intermédiaire d'un dispositif d'accouplement (80, 80"), le dispositif d'accouplement étant configuré comme dispositif (80, 80") d'accouplement à roues libres, **caractérisée en ce que**
l'une (66, 66") des roues libres d'accouplement présente une partie d'épaulement (90") qui s'étend dans la direction axiale et à la périphérie extérieure duquel un organe intérieur (84") du dispositif (80, 80") d'accouplement à roues libres est fixé,
**en ce qu'**un organe extérieur (88") du dispositif (80, 80") d'accouplement à roues libres est fixe par rapport à l'autre (54, 54") des roues libres d'accouplement,
**en ce que** l'autre (54, 54") des roues libres d'accouplement présente une partie (94) de palier d'arbre au moyen duquel l'autre (54, 54") des roues libres d'accouplement est montée à rotation sur l'arbre de sortie (38) associé et présente une section de roue (96) reliée à la partie (94) de palier d'arbre et à la périphérie extérieure de laquelle est formée une denture et qui est décalée axialement par rapport à la partie (94) de palier d'arbre et
**en ce que** le dispositif (80, 80") d'accouplement à roues libres est disposé radialement à l'intérieur de la partie de roue (96) et/ou aligné axialement sur la partie (96) de roue.

3. Transmission à double embrayage selon les revendications 1 ou 2, **caractérisée en ce qu'**un rapport de démarrage (1) est configuré comme rapport à enroulement, les deux roues libres d'accouplement (54, 54', 54"; 66, 66', 66") étant sélectionnées de telle sorte que la vitesse de rotation sur l'un (28) des arbres d'entrée est supérieure à la vitesse de rotation sur l'autre (30) des arbres d'entrée lorsque les roues libres d'accouplement (54, 54', 54"; 66, 66', 66") sont accouplées.

4. Transmission à double embrayage selon la revendication 3, **caractérisée en ce que** pour engager le rapport de démarrage (1), une roue libre (68) associée à un deuxième rapport de transmission (2) est raccordée au transfert de puissance sur l'un (40) des arbres de sortie.

5. Transmission à double embrayage selon l'une des revendications 1 à 4, **caractérisée en ce qu'**une première roue libre d'accouplement (54, 54', 54") des roues libres d'accouplement (54, 54', 54"; 66, 66', 66") est associée à un rapport de transmission (5) de la première transmission partielle (34), une deuxième roue libre d'accouplement (66, 66', 66") des roues libres d'accouplement (54, 54', 54"; 66, 66', 66") étant associée à un rapport de transmission (6) de la deuxième transmission partielle (36).

6. Transmission à double embrayage selon l'une des revendications 1 à 5, **caractérisée en ce que** le rapport de transmission qui présente le plus petit rapport de transmission de la transmission partielle (34) associée aux rapports de transmission impairs est le rapport de transmission 3.

7. Transmission à double embrayage selon l'une des revendications 1 à 6, **caractérisée en ce qu'**un ensemble (56, 74) d'embrayage de changement de rapport de transmission est associé à au moins l'une des roues libres d'accouplement (54, 54', 54"; 66, 66', 66") pour relier la roue libre d'accouplement (54, 54', 54"; 66, 66', 66") à l'autre arbre de sortie (38).

8. Procédé de démarrage au moyen d'un rapport de transmission de démarrage (1) d'une transmission (14) à double embrayage selon l'une des revendications 1 à 7, le procédé présentant à partir d'une situation dans laquelle le premier et le deuxième embrayage à frottement (22, 24) sont ouverts les étapes qui consistent à :
fermer un embrayage de changement de rapport d'un rapport de transmission (2) de la transmission partielle (36) associée aux rapports de transmission pairs, l'embrayage de changement de rapport étant associé à l'un (40) des arbres de sortie et
fermer l'embrayage à frottement (22) associé aux rapports de transmission impairs de telle sorte que la puissance de démarrage soit transmise depuis l'arbre d'entrée (28) associé aux rapports de transmission impairs à l'une des (54, 54', 54") des roues libres d'accouplement (54, 54', 54"; 66, 66', 66"), la puissance étant ensuite transférée par l'intermédiaire du dispositif d'accouplement (80, 80', 80") à roues libres sur l'autre roue libre d'accouplement (66, 66', 66") de laquelle la puissance est transmise par l'intermédiaire de l'autre arbre d'entrée (30) et de l'embrayage de changement de rapport fermé à l'arbre de sortie (40).
